# EUROPEAN PATENT APPLICATION

(11) **EP 2 418 494 A1**
(43) Date of publication of application: **15.02.2012**
(21) Application number: 10761744.1
(22) Date of filing: 08.04.2010
(51) Int. Cl.: G01N 35/02, G01N 35/10

(54) **AUTOANALYZER**

(30) Priority: 09.04.2009 JP 2009094817
(71) Applicant: Hitachi High-Technologies Corporation, Tokyo 105-8717 (JP)
(72) Inventor: MIMURA, Tomonori, Hitachinaka-shi Ibaraki 312-8504 (JP); MAKINO, Akihisa, Hitachinaka-shi Ibaraki 312-8504 (JP); ADACHI, Sakuichiro, Kokubunji-shi Tokyo 185-8601 (JP)
(74) Representative: Strehl Schübel-Hopf & Partner
(86) International application number: PCT/JP2010/056397
(87) International publication number: WO 2010/117045

(57) **Abstract**

An automatic analysis apparatus capable of aligning the timing of sample dispensing, simplifying the configuration of the apparatus, and efficiently carrying out tests of a plurality of items is provided. An intermediate disk (disk) is set so that an A-cycle for carrying out an operation for pretreatment and B-cycles for carrying out operations for dispensing a sample to a reaction disk and a flow analysis mechanism serving as test mechanisms are combined to use n-units of the B-cycles as a dispensing operation cycle time period of the sample. In other words, operation cycle time period for re-dispensing (cycle time period of the dispensing operation to the test mechanisms of a plurality of items) is n-times a minimum operation cycle time period ("n" is an integer or an intermediate value between integers). Therefore, the timing of sampling can be efficiently aligned so that the test of an item having a short analysis cycle can be carried out during the test of an item having a long analysis cycle and that the tests of an item having a large number of requests can be carried out during the test of the item having a small number of requests.

## Description

### TECHNICAL FIELD

The present invention relates to an automatic analysis apparatus that automatically analyzes components of, for example, blood and particularly to technique effectively applied to an apparatus that carries out tests of a plurality of items such as a biochemical test, an immunoserological test, and a blood coagulation test.

### BACKGROUND ART

Clinical tests require various pretreatment such as centrifugal separation, hemolysis, and B/F separation of antigen-antibody reactions in immunoserological tests. Such pretreatment is not carried out in an automatic analysis apparatus which actually carries out the tests, but carried out in a dedicated apparatus in advance in many cases.

A specimen conveying system is well known as the apparatus, which carries out pretreatment in advance. The specimen conveying system connects a pretreating unit and a plurality of analysis apparatuses by a belt conveyor, and a specimen set in a rack is conveyed on the belt conveyor to the destination pretreating unit or analysis apparatus. However, if a system which automates and processes all of such tests carried out in clinical test rooms is introduced, enormous cost is required, and it cannot be carried out in, for example, a normal hospital.

In an apparatus dedicated to immunoserological tests, B/F separation, hemolysis treatment, etc. are achieved by the part of a pretreatment mechanism in the apparatus. However, the apparatus to which a B/F separating function is added generally has a complex mechanism, and problems such as a large apparatus size and low processing ability have been pointed out. Meanwhile, if apparatuses are not mutually connected in a system, tests are separately carried out, a plurality of tasks such as movement of specimens among the apparatuses, setting of the specimens to the apparatuses, analysis-requesting operations, and organizing of output results are complicated, and efficiency is bad.

The techniques which enable a series of tests such as biochemical tests, immunoserological tests, and blood coagulation tests to be carried out in the same apparatus in order to solve these problems are known. For example, Patent Document 1 proposes an apparatus composed of a first test mechanism which carries out biochemical and immunoserological tests and a second test mechanism which carries out immunological coagulation tests. Patent Document 2 proposes a test method of sequentially moving many reaction containers by a container-by-container moving operation and calculating light intensity by the photometry intervals corresponding to samples upon reciprocating operation. Furthermore, recently, an apparatus having a plurality of test mechanisms, a pretreating function, etc. in combination is commercially sold.

On the other hand, as a method of dilution as pretreatment of specimen samples, for example, as described in Patent Document 3, a method including containers to which the samples are to be dispensed and a dispensing mechanism which dispenses a diluting solution, wherein the samples and the diluting solution are dispensed while moving the containers in order is known.

Specifically, a disk on which the containers are disposed is moved by "one rotation + one container" or by "half-rotation + one container" in one cycle. Then, after one cycle or several cycles, the stopping positions of the containers are moved by the distance corresponding to one container. In the process of sequential movement in this manner, each container undergoes dispensing of the sample, dispensing of the diluting solution, and agitation, wherein the sample is diluted in the container. The container which has undergone dilution is moved to the position at which the sample is to be dispensed again.

### Conventional Art Documents

### Patent Documents

Patent Document 1: Japanese Patent Application Laid-Open Publication No. 2001-13151
Patent Document 2: Japanese Patent Application Laid-Open Publication No. 2001-27639
Patent Document 3: Japanese Patent Application Laid-Open Publication No. 8-194004

### DISCLOSURE OF THE INVENTION

### PROBLEMS TO BE SOLVED BY THE INVENTION

However, when the analyses of a plurality of fields such as biochemical tests, immunoserological tests, and blood coagulation tests are simply combined by one apparatus, the relations between the analyses become complex. In both of the proposals of Patent Documents 1 and 2, the pretreatment, etc. is carried out by a different apparatus, and the apparatus configuration including the pretreatment cannot be simplified. Furthermore, also in the above-described apparatus which is recently sold and has the pretreating function, etc. in combination, the number of apparatus mechanisms is large, and the configuration thereof is complex as it has, for example, a reagent dispensing mechanism provided for each of all the test items of immunity, biochemical, etc.

When the apparatus configuration becomes complex, operations thereof inevitably become complex. Therefore, in order to simplify the apparatus, parts of the mechanisms and operations thereof have to be standardized. Among the operations, sampling (sample dispensing) is carried out in any of test items; therefore, it is desirable that the timing thereof be aligned. Particularly, if the processing ability of sampling is low, congestion readily occurs in the case in which a plurality of test mechanisms are combined, and thus the processing ability of the whole apparatus is reduced. Therefore, it is important to improve the processing ability of sampling.

In order to control the sampling timing without interrupting a plurality of analysis steps, for example, there are problems of the items below (1) to (3) when explained based on the diluting method of Patent Document 3.

### (1) Reduction in Processing Ability

When dispensing for the tests of a plurality of items is carried out per one sample, during re-dispensing, the disk stops at a certain position, and sampling is repeated thereat. Therefore, during that process, dilution of a new sample or cleaning of the containers cannot be carried out, and thus the processing ability of the apparatus is reduced.

Moreover, if carry-over of a reagent probe provided in a reagent dispensing mechanism is generated in an analysis step thereafter, an operation for cleaning has to be added after the operation of the reagent probe. Furthermore, along with implementation of the tests of a plurality of items, the operation timing of the reagent dispensing mechanism is overlapped in some cases. Also in these cases, the processing ability of the apparatus is reduced.

### (2) Controlling Processing Time is Complex and Difficult

The pretreatment of the samples include the items which do not limit processing time and the items which require certain processing time. For example, in the test items of enzymes, protein, etc. , simple dilution is carried out; therefore, it is only required to dilute samples at a certain multiplying factor. On the other hand, for example, in measurement of HbAlc which is a hematocyte component in blood, an erythrocyte component sample is separated, a certain amount of a diluting solution is then poured thereinto, and hemolysis is carried out; therefore, it has to be left untouched for a certain period of time or it has to be heated at a certain temperature.

Therefore, in the case in which sampling is to be carried out a plurality of times in re-sampling (re-dispensing), for example, the samples cannot be left untouched for a certain period of time in the above-described diluting method.

### (3) Analysis Principles and Analysis Cycles are Different Among Test Items

Since analysis principles are different among test items, reaction time is also different. For example, in biochemical or blood coagulation tests, measurement is carried out a plurality of times at certain interval during reactions; on the other hand, in immunoserological tests, measurement is carried out only after certain time elapses, and measurement during reactions is not carried out. Moreover, since analysis cycles are mutually different, control for carrying out a plurality of tests by one apparatus becomes complex, and efficient processing cannot be carried out.

According to the problems of the items (1) to (3), analysis cycles have to be determined in consideration of a plurality of conditions such as the operation of the whole apparatus, pretreatment, and reaction time of each test.

Herein, a research of the present inventor elucidated that, when the number of requests of test items were counted, the ratio of biochemical tests to other tests was about 5 to 1, and thus the number of the biochemical tests was large; and, in analysis steps of the biochemical tests, two types of reagents were used in ninety percent of the items thereof, and there were not many items in which pretreatment is carried out.

Therefore, it has been desired to efficiently align the sampling timing so that the test of the item having a short analysis cycle can be carried out during the test of the item having a long analysis cycle and that the test of the item of which the number of requests is large can be carried out during the test of the item of which the number of requests is small.

### SUMMARY OF THE INVENTION

It is a preferred aim of the present invention to provide an automatic analysis apparatus capable of aligning timing of sample dispensing, simplifying the apparatus configuration, and efficiently carrying out tests of a plurality of items.

The above and other preferred aims and novel characteristics of the present invention will be apparent from the description of the present specification and the accompanying drawings.

### MEANS FOR SOLVING THE PROBLEMS

The typical ones of the inventions disclosed in the present application will be briefly described as follows.

More specifically, an automatic analysis apparatus of the present invention includes: a disk with an intermediate container disposed on the disk, the intermediate container carrying out pretreatment of a sample dispensed from a sample container using a pretreatment liquid or a reaction between the sample and a reagent; and a test mechanism of a plurality of items of the sample dispensed from the sample container or from the intermediate container, wherein a cycle time period of an operation of dispensing the sample from the sample container or the intermediate container to the test mechanism of the plurality of items is n-times a minimum operation cycle time period of each test item, where "n" is an integer or an intermediate value between integers.

### EFFECTS OF THE INVENTION

The effects obtained by typical aspects of the present invention will be briefly described below.

Specifically, an automatic analysis apparatus of the present invention causes the cycle time period of an operation of dispensing a sample from a sample container or an intermediate container to a test mechanism of a plurality of items to be n-times a minimum operation cycle time period of each test item ("n" is an integer or an intermediate value between integers). Therefore, the timing of sample dispensing can be aligned in consideration of a plurality of conditions such as the operation of the whole apparatus and reaction time periods of the tests. In other words, the timing of sample dispensing can be efficiently aligned so that the test of the item having a short analysis cycle can be carried out during the test of an item having a long analysis cycle and that the test of an item having a large number of requests can be carried out during the test of an item having a small number of requests. As a result, the timing of sample dispensing is aligned, the configuration of the apparatus is simplified, and the tests of the plurality of items can be efficiently carried out.

### BRIEF DESCRIPTIONS OF THE DRAWINGS

FIG. 1 is a schematic plan view illustrating an outline of an embodiment of an automatic analysis apparatus of the present invention;
FIG. 2 is a drawing illustrating the flows of samples, pretreatment liquid, reagents, etc. in the automatic analysis apparatus of FIG. 1;
FIGS. 3A to 3C are explanatory drawings explaining an example of operation flows in the automatic analysis apparatus of FIG. 1;
FIGS. 4A to 4C are explanatory drawings explaining the example of operation flows in the automatic analysis apparatus of FIG. 1;
FIGS. 5A to 5C are explanatory drawings explaining the example of operation flows in the automatic analysis apparatus of FIG. 1;
FIG. 6 is an explanatory drawing explaining another example of the operation flow in the automatic analysis apparatus of FIG. 1;
FIG. 7 is a schematic plan view illustrating an outline of a modification example of the automatic analysis apparatus of the present invention;
FIG. 8 is a schematic plan view illustrating an outline of a modification example of the automatic analysis apparatus of the present invention;
FIG. 9 is a schematic plan view illustrating an outline of a modification example of the automatic analysis apparatus of the present invention;
FIG. 10 is an explanatory drawing explaining a basic cycle;
FIG. 11 is an explanatory drawing explaining rotating operations of an intermediate disk in A-cycles;
FIGS. 12A and 12B are explanatory drawings explaining rotating operations of the intermediate disk in B-cycles;
FIGS. 13A to 13D are explanatory drawings explaining the operations in the case in which the basic cycle of FIG. 10 serves as a shortest cycle;
FIG. 14 is a drawing illustrating an example of the rotating operation of the intermediate disk in the case in which 20 containers are disposed;
FIG. 15 is a drawing illustrating an example of the rotating operation of the intermediate disk in the case in which the 20 containers are disposed;
FIG. 16 is a drawing illustrating an example of the rotating operation of the intermediate disk in the case in which the 20 containers are disposed;
FIG. 17 is a drawing illustrating an example of the rotating operation of the intermediate disk in the case in which the 20 containers are disposed;
FIG. 18 is a drawing illustrating an example of the rotating operation of the intermediate disk in the case in which the 20 containers are disposed;
FIG. 19 is a drawing illustrating an example of the rotating operation of the intermediate disk in the case in which the 20 containers are disposed;
FIG. 20 is a drawing illustrating an example of the rotating operation of the intermediate disk in the case in which the 20 containers are disposed;
FIGS. 21A and 21B are explanatory drawings explaining an example of the operations in the case in which operation cycles of n=2 and n=3 are combined;
FIG. 22 is an explanatory drawing explaining the operation in the case in which a sample has to be left untouched or heated for a certain period of time in pretreatment;
FIGS. 23A and 23B are explanatory drawings illustrating examples of the operations in biochemical tests;
FIGS. 24A to 24D are explanatory drawings explaining examples of the operations in immunoserological tests;
FIGS. 25A to 25C are explanatory drawings explaining operation examples in the cases in which biochemical tests and immunoserological tests are combined;
FIG. 26 is a flow chart illustrating a flow of priority determination;
FIGS. 27A to 27C are explanatory drawings explaining examples of operations in accordance with the priority determination; and
FIG. 28 is an explanatory drawing explaining overlapping of a reagent dispensing mechanism.

### BEST MODE FOR CARRYING OUT THE INVENTION

Hereinafter, an embodiment of the present invention will be explained in detail based on drawings. Note that the parts having the same functions are basically denoted by the same reference numerals in all of the drawings for explaining the present embodiment, and repeated explanations thereof will be omitted as much as possible.

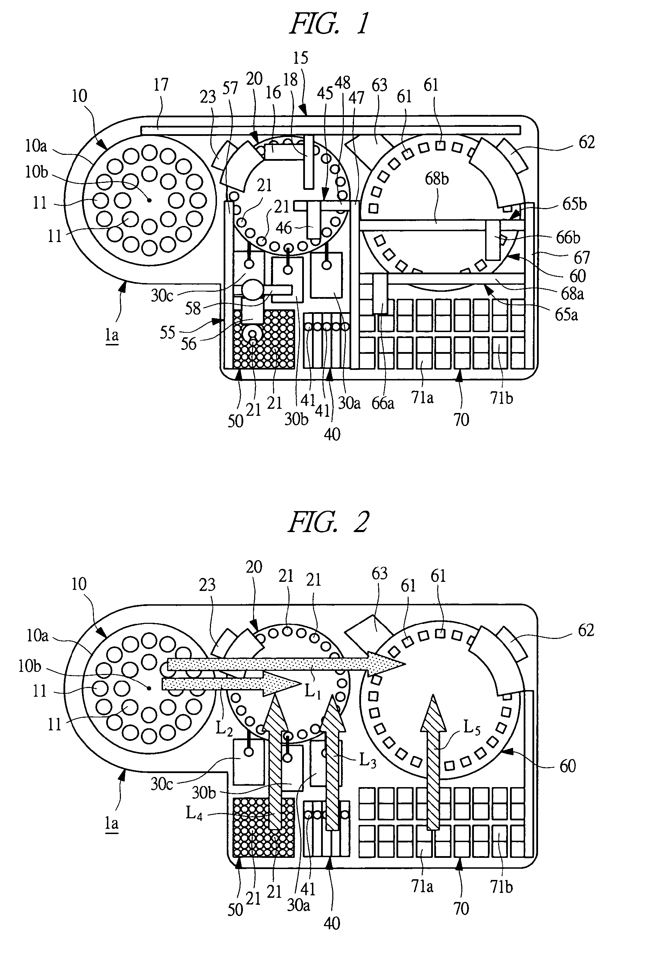

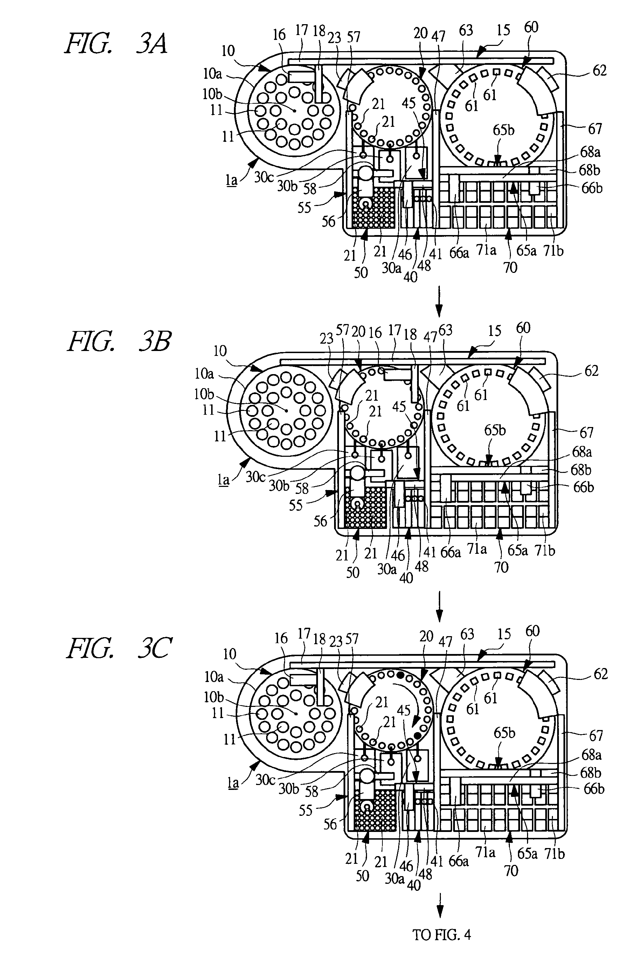

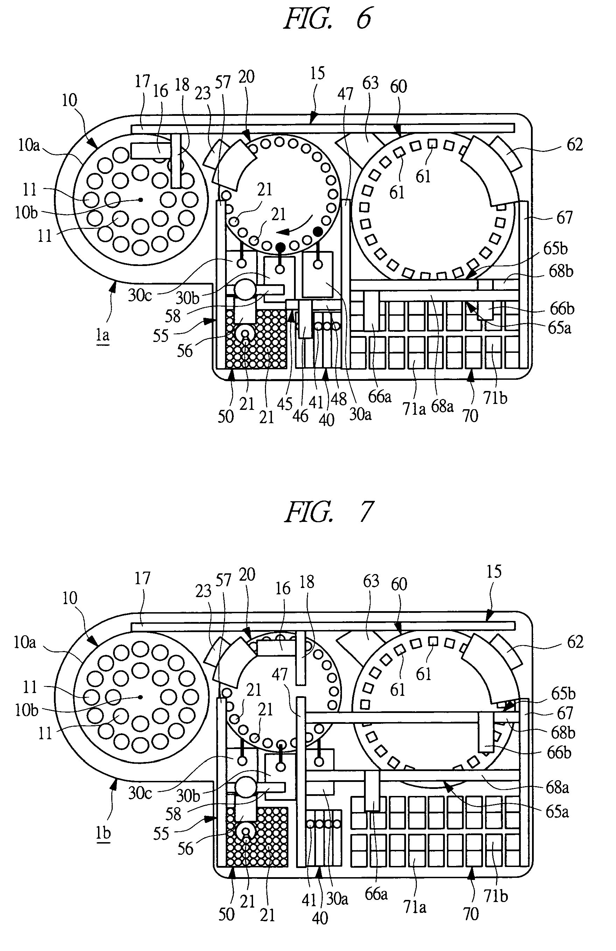

FIG. 1 is a schematic plan view illustrating an outline of the embodiment of an automatic analysis apparatus of the present invention, and FIG. 2 is a drawing illustrating the flows of samples, pretreatment liquid, reagents, etc. in the automatic analysis apparatus of FIG. 1. FIGS. 3A to 3C, FIGS. 4A to 4C, and FIGS. 5A to 5C are explanatory drawings explaining an example of operation flows in the automatic analysis apparatus of FIG. 1 in this order. FIG. 6 is an explanatory drawing explaining another example of the operation flows in the automatic analysis apparatus of FIG. 1. Note that, in FIG. 2, illustration of sample dispensing mechanisms is intentionally omitted in order to facilitate understanding. Also, illustration of a control unit which controls the entire automatic analysis apparatus, a display unit of analysis data, an input unit, and a storage unit is also intentionally omitted in all of the drawings.

As illustrated in FIG. 1, the automatic analysis apparatus 1a is provided with: a sample disk 10, an intermediate disk (disk) 20, and a reaction disk (test mechanism) 60 in this order along the longitudinal direction of the apparatus.

Flow analysis mechanisms (test mechanisms) 30a to 30c are provided in the apparatus front side with respect to the intermediate disk 20. In the further apparatus front side with respect to the flow analysis mechanisms 30a to 30c, a pretreatment-liquid and flow-analysis-reagent container housing unit (hereinafter, referred to as "housing unit of pretreatment liquid container etc.") 40 and a disposable container housing unit 50 are provided. In the apparatus front side with respect to the reaction disk 60, a biochemical test reagent cassette 70 is provided.

Between the components, the following dispensing mechanisms or a transporting mechanism are provided. More specifically, a sample dispensing mechanism 15 is provided between the sample disk 10 and the reaction disk 60. A pretreatment-liquid and flow-analysis-reagent dispensing mechanism (hereinafter, referred to as "dispensing mechanism of pretreatment liquid etc.") 45 is provided between the intermediate disk 20 and the housing unit of pretreatment liquid container etc. 40, and a disposable container transporting mechanism 55 is provided also between the intermediate disk 20 and the disposable container housing unit 50. First and second reagent dispensing mechanisms 65a and 65b are provided between the reaction disk 60 and the biochemical test reagent cassette 70.

On the sample disk 10, sample containers 11, which retain samples, are disposed at predetermined interval on the side of an outer circumference 10a and on the side of a center 10b.

The intermediate disk 20 is provided in a lateral side of the sample disk 10 to carry out not only pretreatment of samples by pretreatment liquid, but also reactions between the samples and a flow analysis reagent. Note that "pretreatment" referred to in the present invention includes dilution of a sample. Also, the act of leaving it untouched for a predetermined period of time or heating it at a certain temperature after dispensing of the flow analysis reagent is also referred to as "pretreatment" in some cases.

Disposable containers (intermediate containers) 21 are detachably disposed at predetermined interval on the intermediate disk 20 along the circumferential direction thereof, and, in the illustrated example, a cleaning mechanism 23, which cleans the disposable containers 21, is provided. Note that, in the case in which all of the disposable containers 21 are disposable, the cleaning mechanism 23 is not required to be provided. Moreover, although illustration is omitted, an agitating mechanism, which agitates the sample with the pretreatment liquid or flow reagent, is also provided.

The flow analysis mechanisms 30a to 30c are capable of suitably selecting and carrying out the tests of publicly-known items, in which flow analysis such as immunoserological tests, blood coagulation tests, and electrolyte tests can be carried out, in accordance with requested contents. The number of the flow analysis mechanisms may be suitably increased, reduced, or eliminated in accordance with requested contents. As a result, the apparatus can be further simplified.

As a matter of course, a container 41 housed in the housing unit of pretreatment liquid container etc. 40 is configured to retain pretreatment liquid when pretreatment is to be carried out and, when flow analysis is to be carried out, the containers 41 retain a corresponding flow analysis test reagent, respectively.

The disposable containers 21 housed in the disposable container housing unit 50 can be suitably exchanged with the disposable containers 21 of the intermediate disk 20 by a disposable container transporting mechanism 55.

On the reaction disk 60, reaction containers 61 fixed at predetermined intervals along the circumferential direction thereof are disposed, and a photometric mechanism 62 for biochemical tests and a cleaning mechanism 63, which cleans the reaction containers 61, are provided. Moreover, although illustration is omitted, the reaction disk 60 is also provided with an agitating mechanism, which agitates the sample with the reagent. Although illustration is also omitted, the photometric mechanism 62 is provided with, for example, a light source, which radiates analysis light for analyzing the reaction liquid in the reaction containers 61, and a detector, which subjects the analysis light transmitted through the reaction liquid to spectroscopy and detects it. The photometric mechanism 62 may be used in the tests of the items other than those of biochemical.

In the biochemical test reagent cassette 70, first and second reagent retaining units 71a and 71b are formed; therefore, a first reagent and a second reagent for a biochemical test(s) can be retained by one container, and the necessity of separated management thereof is thus eliminated. However, the first reagent and the second reagent may be separately retained by containers such as test tubes; alternatively, a reagent disk may be provided, and the reagents may be retained in containers disposed thereon. The biochemical test reagent cassette 70 may retain test reagents of another item(s).

In addition to the above-described sample disk 10, the intermediate disk 20, and the reaction disk 60, a waiting disk may be provided as a disk; and waiting until retests of samples or until elapse of the time of reaction with the reagents, dispensing of the reagents, etc. may be carried out on the waiting disk.

The sample dispensing mechanism 15 is a so-called XY-rail type dispensing mechanism provided with a sample dispensing arm 16, a horizontal rail 17 provided along the horizontal direction, and a perpendicular rail 18 provided along the perpendicular direction. Therefore, the sample dispensing mechanism 15 is capable of optionally approaching the container at any position on the intermediate disk 20 or the reaction disk 60 and carrying out dispensing of a sample thereat. Note that being orthogonal to the horizontal direction is expressed as "perpendicular" herein.

The horizontal rail 17 is provided from the sample disk 10 to the reaction disk 60 in the rear end of the apparatus. The perpendicular rail 18 is attached so as to be extended from the horizontal rail 17 toward the inner side of the apparatus and slides on the horizontal rail 17. The sample dispensing arm 16 is attached to the perpendicular rail 18 and slides on the perpendicular rail 18. In other words, the horizontal movement of the sample dispensing arm 16 is guided by the horizontal rail 17 via the perpendicular rail 18, and the perpendicular movement of the arm is directly guided by the perpendicular rail 18.

All of the dispensing mechanism of pretreatment liquid etc. 45, the disposable container transporting mechanism 55, and the first and second reagent dispensing mechanisms 65a and 65b are XY-rail type dispensing mechanisms as well as the sample dispensing mechanism 15.

The dispensing mechanism of pretreatment liquid etc. 45 suitably selects and dispenses the pretreatment liquid or flow analysis reagents retained in the containers 41 of the housing unit of pretreatment liquid container etc. 40 in accordance with requested contents.

The dispensing mechanism of pretreatment liquid etc. 45 is composed of a dispensing arm of pretreatment liquid etc. 46, a perpendicular rail 47 extending from the gap between the intermediate disk 20 and the reaction disk 60 toward the front of the apparatus, and a horizontal rail 48 attached so as to be extended from the perpendicular rail 47 toward the intermediate disk 20. The horizontal rail 48 slides on the perpendicular rail 47, and the dispensing arm of pretreatment liquid etc. 46 slides on the horizontal rail 48. Note that the perpendicular rail 47 is shared by the first and second reagent dispensing mechanisms 65a and 65b.

The disposable-container transporting mechanism 55 is provided with: a container grasping arm 56, which holds the disposable container 21 at the distal end thereof; a perpendicular rail 57, which is provided so as to be opposed to the perpendicular rail 47 of the dispensing mechanism of pretreatment liquid etc. 45 with the intermediate disk 20 interposed therebetween; and a horizontal rail 58 extended from and attached to the perpendicular rail 57. The horizontal rail 58 slides on the perpendicular rail 57, and the container grasping arm 56 slides on the horizontal rail 58.

The first reagent dispensing mechanism 65a shares the perpendicular rail 47 with the dispensing mechanism of pretreatment liquid etc. 45 and is composed of a first reagent dispensing arm 66a, a perpendicular rail 67 provided so as to be opposed to the perpendicular rail 47 with the reaction disk 60 interposed therebetween, and a horizontal rail 68a installed between the perpendicular rails 47 and 67. The horizontal rail 68a slides on the perpendicular rails 47 and 67, and the first reagent dispensing arm 66a slides on the horizontal rail 68a.

The second reagent dispensing mechanism 65b shares the perpendicular rail 47 with the dispensing mechanism of pretreatment liquid etc. 45 and the first reagent dispensing mechanism 65a and is provided with a second reagent dispensing arm 66b and a horizontal rail 68b installed between the perpendicular rails 47 and 67. As well as the first reagent dispensing mechanism 65a, the horizontal rail 68b slides on the perpendicular rails 47 and 67, and the second reagent dispensing arm 66b slides on the horizontal rail 68b.

As long as dispensing to optional containers on the disks can be carried out, the dispensing mechanisms may be other publicly-known dispensing mechanisms such as multi-joint type arms.

As described above, in the automatic analysis apparatus 1a, as illustrated in FIG. 2, a flow L₁ of the samples from the sample disk 10 to the reaction disk 60 mainly in the case of biochemical tests which do not carry out pretreatment and a similar flow L₂ of the samples to the intermediate disk 20 mainly in the case of biochemical tests and flow analysis which carry out pretreatment are formed. Moreover, a flow L₃ of the pretreatment liquid, etc. from the housing unit of pretreatment liquid container etc. 40 to the intermediate disk 20, a similar flow L₄ of the disposable containers 21 from the disposable container housing unit 50, and a flow L₅ of the reagents from the biochemical test reagent cassette 70 to the reaction disk 60 are formed.

The flows of the operation of the automatic analysis apparatus 1a according to the above-described configuration will be explained by taking, as an example, the case in which a biochemical test requires pretreatment.

As illustrated in FIG. 3A, when a biochemical test that requires pretreatment is started, in the automatic analysis apparatus 1a, the sample dispensing arm 16 of the sample dispensing mechanism 15 is moved to above the sample container 11 of the sample disk 10 by the horizontal rail 17 and the perpendicular rail 18 and suctions a sample in the sample container 11.

After the sample suction, as illustrated in FIG. 3B, the sample dispensing arm 16 is moved to above the disposable container 21 of the intermediate disk 20 and discharges the sample into the disposable container 21.

After the sample discharge, as illustrated in FIG. 3C, the intermediate disk 20 rotates clockwise (see an arrow in the drawing) to move the sample (black-colored positions in the drawing, wherein both of the positions before the movement and after the movement are colored black in order to facilitate understanding). The dispensing arm of pretreatment liquid etc. 46 of the dispensing mechanism of pretreatment liquid etc. 45 is moved to above the container 41 of the housing unit of pretreatment liquid container etc. 40 by the perpendicular rail 47 and the horizontal rail 48 and suctions pretreatment liquid in the container 41. Note that, in the example illustrated in the drawing, the sample dispensing arm 16 returns to the original position above the sample disk 10.

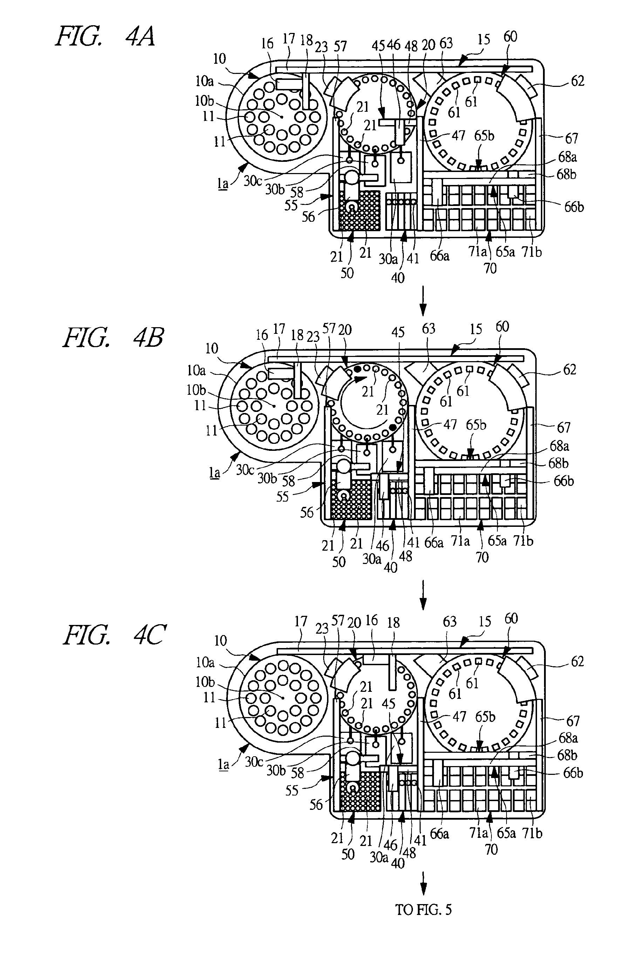

After the sample movement and the pretreatment liquid suction, as illustrated in FIG. 4A, the dispensing arm of pretreatment liquid etc. 46 is moved to above the sample-housing disposable container 21 of the intermediate disk 20 and discharges the pretreatment liquid into the disposable container 21.

After the discharge of the pretreatment liquid, when pretreatment is finished, as illustrated in FIG. 4B, the intermediate disk 20 rotates clockwise (see an arrow in the drawing) to move the pretreated sample. Note that, in the example illustrated in the drawing, the dispensing arm of pretreatment liquid etc. 46 returns to the original position above the housing unit of pretreatment liquid container etc. 40.

After the movement of the pretreated sample, as illustrated in FIG. 4C, the sample dispensing arm 16 is moved to above the disposable container 21 housing the pretreated sample and suctions the pretreated sample in the disposable container 21.

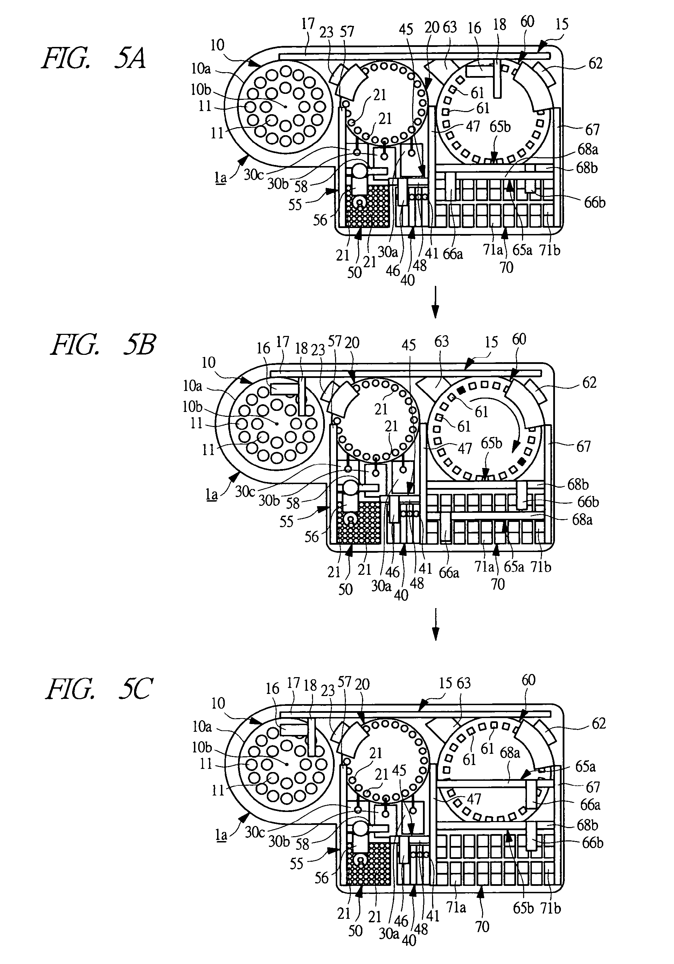

After the suction of the pretreated sample, as illustrated in FIG. 5A, the sample dispensing arm 16 is moved to above the reaction container 61 of the reaction disk 60 and discharges the pretreated sample into the reaction container 61.

After the discharge of the pretreated sample, as illustrated in FIG. 5B, the reaction disk 60 rotates clockwise (see an arrow in the drawing) to move the pretreated sample of the reaction container 61 (black-colored positions in the drawing, wherein both of the positions before the movement and after the movement are colored black in order to facilitate understanding). Moreover, the first reagent dispensing arm 66a of the first reagent dispensing mechanism 65a is moved to above the first reagent retaining unit 71a of the biochemical test reagent cassette 70 by the perpendicular rails 47 and 67 and the horizontal rail 68a and suctions the first reagent retained in the first reagent retaining unit 71a.

After the movement of the pretreated sample and the suction of the first reagent, as illustrated in FIG. 5C, the first reagent dispensing arm 66a is moved to above the reaction container 61 housing the pretreated sample and discharges the first reagent into the reaction container 61.

After the discharge of the first reagent, although illustration is omitted, in accordance with needs, the second reagent dispensing arm 66b is moved to above the second reagent retaining unit 71b. Then, the arm suctions the second reagent, then is moved to above the reaction container 61 housing the pretreated sample and the first reagent, and discharges the second reagent into the reaction container 61. Note that the dispensing of the second reagent is normally carried out after about five minutes elapses after the discharge of the first reagent.

Thus, the reaction liquid after the reactions between the sample and the first reagent and, in accordance with needs, that after the reaction between the sample and the second reagent is moved to the photometric mechanism 62 by the rotation of the reaction disk 60 and subjected to analysis. After the analysis is finished, the reaction container 61 is cleaned by the cleaning mechanism 63. Also, the disposable container 21 is cleaned by the cleaning mechanism 23, or the disposable container is transported to the disposable container housing unit 50 by the container grasping arm 56 of the disposable container transporting mechanism 55 and then discarded thereto.

In a biochemical test which does not require pretreatment, operations basically similar to those of the biochemical test which requires pretreatment are carried out except that the operations illustrated in FIGS. 3B to 4C are not carried out.

Flow analysis such as an immunoserological test is similar to the biochemical test which requires pretreatment except that a test reagent(s) for flow analysis is dispensed instead of the pretreatment liquid in the operations of FIGS. 3A to 4A. Then, after the reactions between the sample and the flow analysis reagent, as illustrated in FIG. 6, the reaction liquid is suctioned by the flow analysis mechanism 30b in the example illustrated in the drawing.

Herein, in the examples described in FIGS. 1 to 6, in total, three reagent dispensing mechanisms, i.e., the dispensing mechanism of pretreatment liquid etc. 45 and the first and second regent dispensing mechanisms 65a and 65b are provided; however, the number thereof may be arbitrarily increased or reduced. If the number thereof is reduced, the apparatus can be further simplified; and, if the number thereof is increased, processing efficiency can be further improved. Such modification examples in which the number of the reagent dispensing mechanisms is changed will be described. FIGS. 7 to 9 are schematic plan views illustrating outlines of the modification examples of the automatic analysis apparatus of the present invention.

An automatic analysis apparatus 1b illustrated in FIG. 7 is provided with two reagent dispensing mechanisms, i.e., only the first and second reagent dispensing mechanisms 65a and 65b, which are caused to function also as dispensing mechanisms of pretreatment liquid etc. so as to be used also for dispensing of the pretreatment liquid and the flow analysis reagents at the intermediate disk 20. In other words, the reagent dispensing mechanisms are shared by the test mechanisms of a plurality of items.

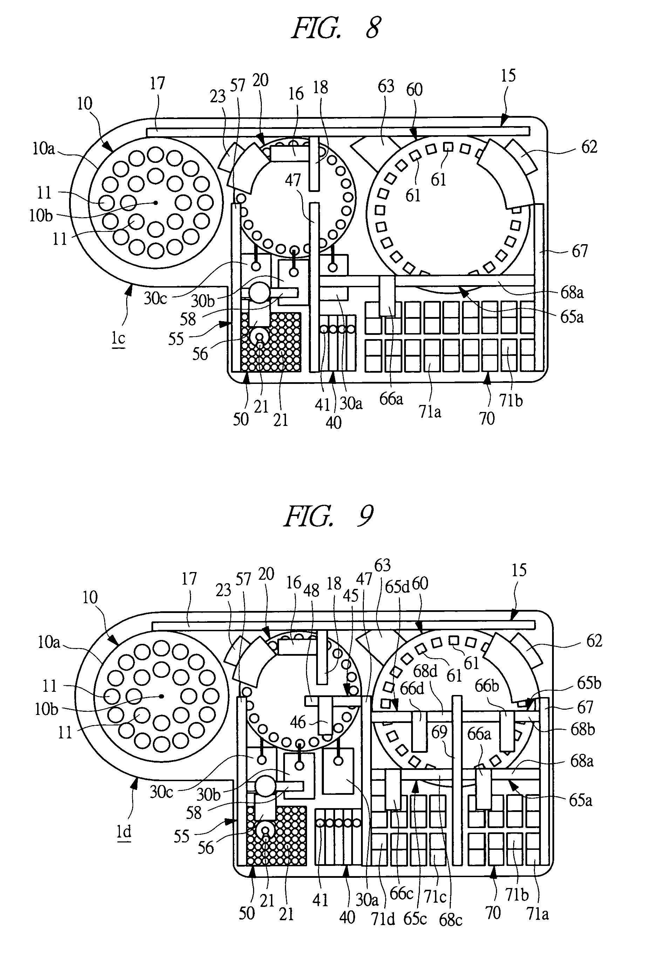

In an automatic analysis apparatus 1c illustrated in FIG. 8, one reagent dispensing mechanism, i.e., only the first reagent dispensing mechanism 65a is provided, and the reagent dispensing mechanism is further standardized.

Contrary to the automatic analysis apparatuses 1b and 1c, in an automatic analysis apparatus 1d illustrated in FIG. 9, not only the first and second reagent dispensing mechanisms 65a and 65b, but also third and fourth reagent dispensing mechanisms 65c and 65d are further provided as the reagent dispensing mechanisms, which dispense reagents to the reaction disk 60.

Similar to the first and second reagent dispensing mechanisms 65a and 65b, the third and fourth reagent dispensing mechanisms 65c and 65d are provided with third and fourth reagent dispensing arms 66c and 66d and horizontal rails 68c and 68d, which cause the arms to slide horizontally.

A perpendicular rail 69 is provided between the horizontal rails 68a and 68b and the horizontal rails 68c and 68d, and the perpendicular rail 69 is shared by the first to fourth reagent dispensing mechanisms 65a to 65d.

The biochemical test reagent cassette 70 is separately disposed in two areas via the perpendicular rail 69. In the biochemical test reagent cassette 70 on the side of the third and fourth reagent dispensing mechanisms 65c and 65d, a third reagent retaining unit 71c which retains a third reagent and a fourth reagent retaining unit 71d which retains a fourth reagent are formed in the same manner as the first and second reagent retaining units 71a and 71b.

In the automatic analysis apparatus 1d, the reaction disk 60 is provided with the four reagent dispensing mechanisms, which dispense reagents; therefore, for example, frequently requested items such as biochemical tests can be more quickly processed by separating them into two, i.e., to the first and second reagent dispensing mechanisms 65a and 65b and to the third and fourth reagent dispensing mechanisms 65c and 65d.

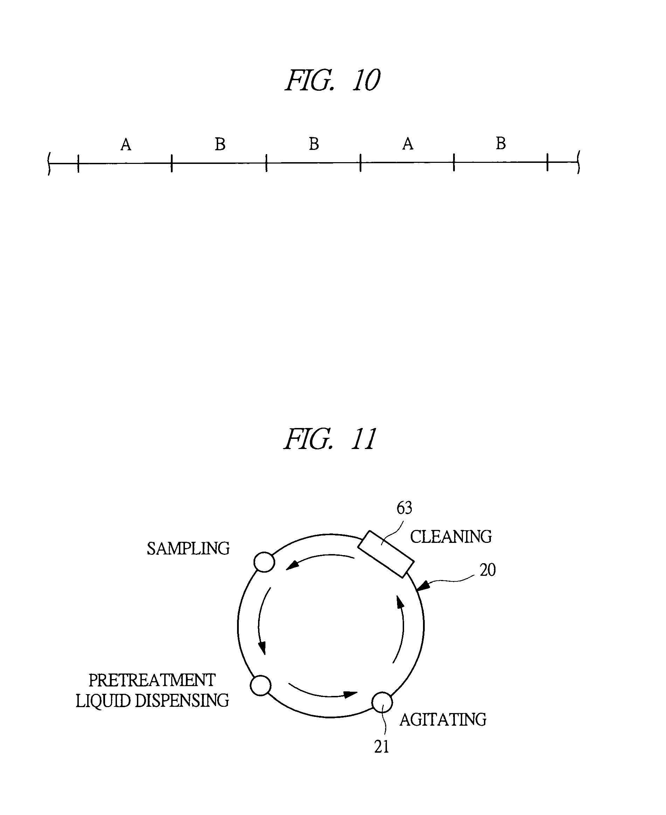

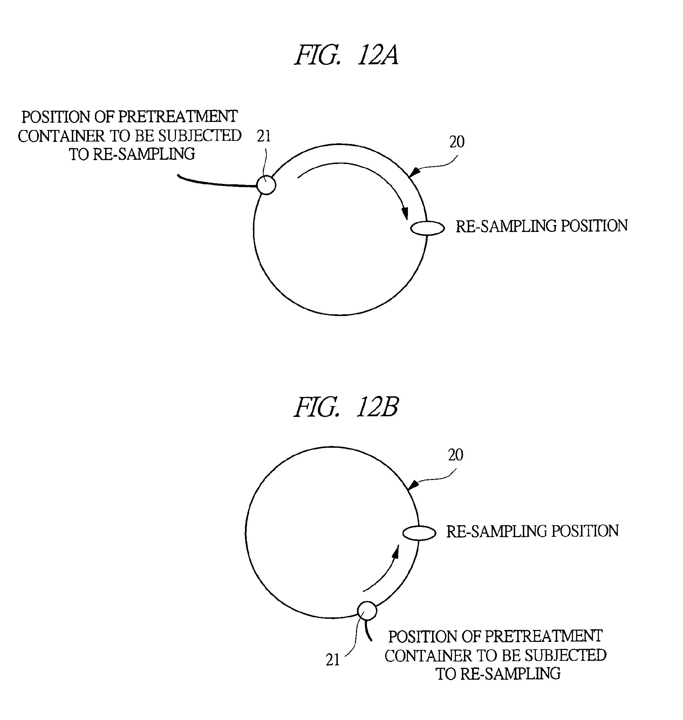

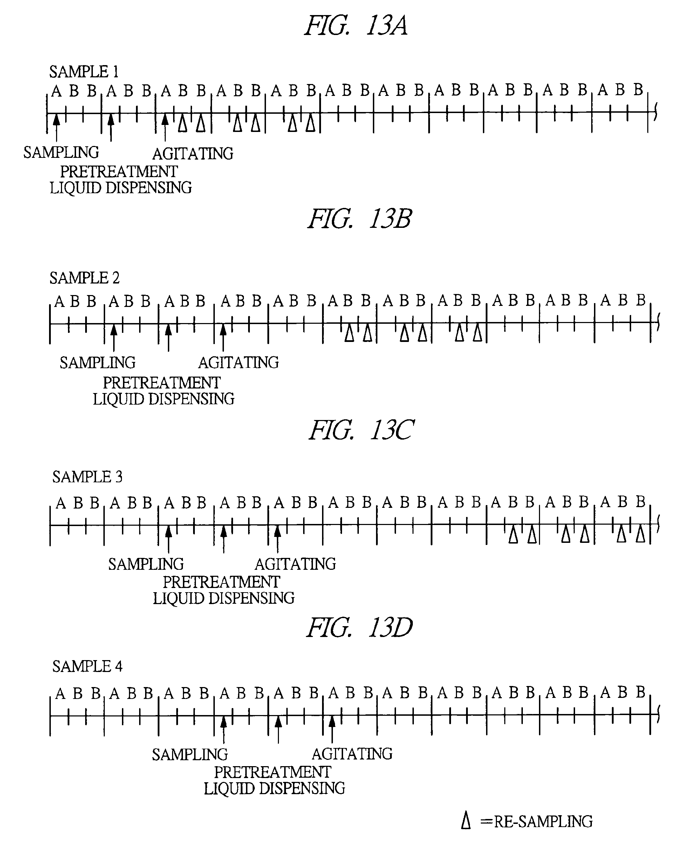

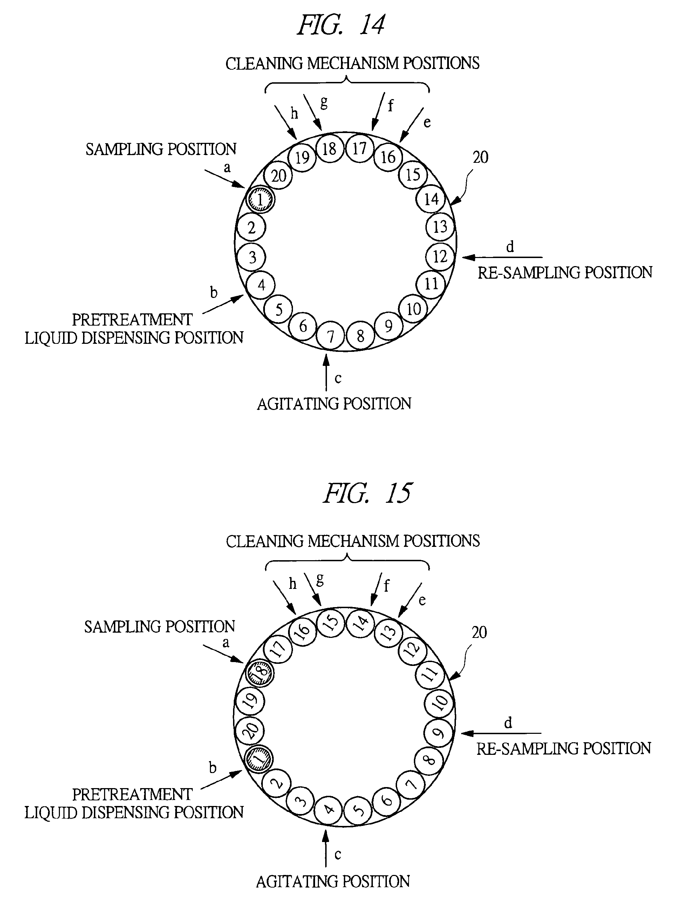

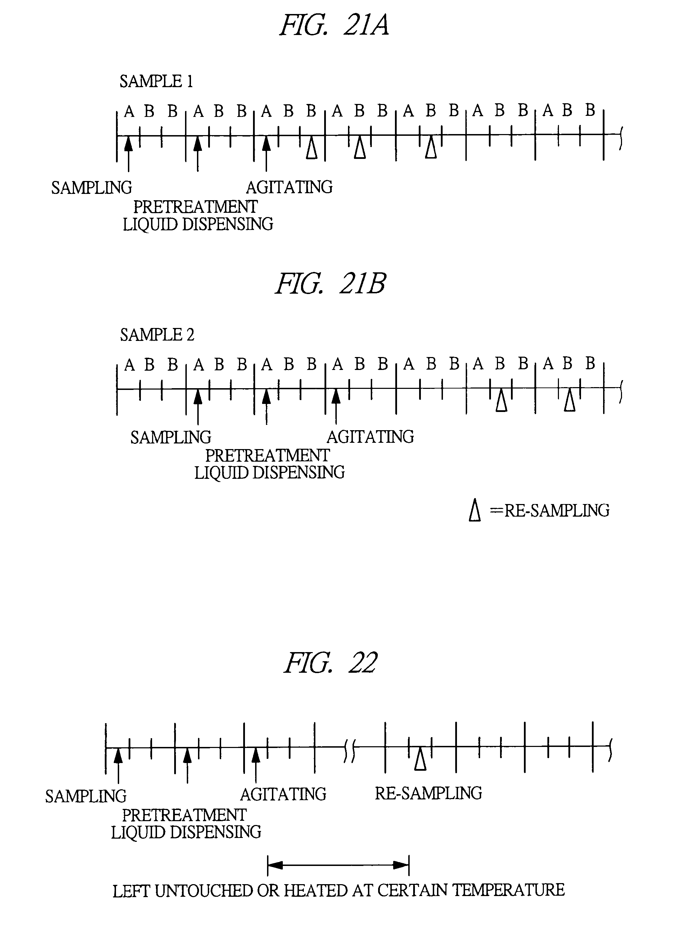

Subsequently, operation cycles of the automatic analysis apparatuses 1a to 1d will be described. FIG. 10 is an explanatory drawing describing a basic cycle, FIG. 11 is an explanatory drawing describing rotating operations of the intermediate disk in A-cycles, and FIGS. 12A and 12B are explanatory drawings explaining rotating operations of the intermediate disk in B-cycles. FIGS. 13A to 13D are explanatory drawings explaining the operations in the case in which the basic cycle of FIG. 10 serves as a shortest cycle, and FIGS. 14 to 20 are drawings illustrating examples of the rotating operations of the intermediate disk in the case in which 20 containers are disposed. FIGS. 21A and 21B are explanatory drawings explaining an example of the operations in the case in which operation cycles of n=2 and n=3 are combined. FIG. 22 is an explanatory drawing explaining the operation in the case in which the sample has to be left untouched or heated for a certain period of time inpretreatment. Note that, in FIG. 11, FIGS. 12A and 12B, and FIGS. 14 to 20, the arrangement of the intermediate disk is intentionally omitted or changed appropriately to facilitate understanding.

As illustrated in FIG. 10, in the automatic analysis apparatuses 1a to 1d, the A-cycles, in which a pretreatment operation is carried out at the intermediate disk, and the B-cycles, in which re-sampling (sample re-dispensing) operations to the reaction disk or the flow analysis mechanism (analysis unit) are carried out, are combined to form the basic cycle. More specifically, each of the A-cycles and B-cycles is independently controlled by the control unit; however, the cycle time periods thereof are equalized, thereby aligning the operation timing of the pretreatment and the operation timing to the analysis unit. Note that, in a test item that does not require pretreatment, a sample dispensing operation is carried out from the sample disk to the reaction disk; however, this will be intentionally referred to as "re-sampling" in order to distinguish it from the operation of dispensing a sample to the intermediate disk.

In a test item of flow analysis, the A-cycle corresponds to an operation of dispensing of a flow analysis reagent to the intermediate disk 20. In a biochemical test that does not require pretreatment, the A-cycle may be allocated to the operation of the B-cycle. The similar thing applies also to the case in which an operation of dispensing to the intermediate disk 20 is not carried out in the A-cycle in a biochemical test or a flow analysis test that requires pretreatment. Note that, in the example of FIG. 10, two B-cycles are inserted after the A-cycle in one basic cycle; however, the number of the B-cycles after the A-cycle may be suitably changed in accordance with test items, the number of samples, etc.

As illustrated in FIG. 11, in the A-cycles, sampling (sample dispensing), pretreatment liquid dispensing, agitating, and cleaning are carried out in the cycles, respectively. The intermediate disk 20 rotates regularly in one direction, for example, in a step serving as a common factor of the number obtained by adding one to the number of disposed containers corresponding to, for example, x-units of containers or of a number other than that.

The B-cycle is operated at the point when the series of operations of the pretreatment up to the agitating in the A cycles is finished and the sample to be re-sampled is prepared. As illustrated in FIG. 12, in the B-cycle, no matter where the container to be subjected to re-sampling next is at any position on the intermediate disk 20, the container is moved to a re-sampling position. The moving distance in this case is not limited; however, the intermediate disk 20 is configured to be able to select any of the clockwise rotation illustrated in FIG. 12A and the counterclockwise rotation illustrated in FIG. 12B so that the moving distance and time can be shortened.

According to such a basic cycle, a re-sampling operation is carried out in the time period of the B-cycle at an optimal cycle number corresponding to the contents of a requested item. More specifically, the operation cycle time period (cycle time period of the operation of dispensing a sample to the test mechanisms of a plurality of items) for re-sampling is n-times minimum operation cycle time period. Herein, the cycle time periods of the A-cycle and the B-cycle are the same; therefore, in a test item with the intermediation of the intermediate disk 20, the re-sampling operation cycle time period corresponds to n-times the rotating operation cycle time period of the intermediate disk 20. Note that "n" can include an intermediate value between integers such as 1.5; however, it is preferred to be an integer when controllability is taken into consideration.

When the above-described basic cycle is a shortest cycle in which n=1, the operations illustrated in FIGS. 13A to 13D are carried out on the intermediate disk 20.

First, in an initial (first) A-cycle, as illustrated in FIG. 13A, a first sample (sample 1) is sampled.

In a next (second) A-cycle, as illustrated in FIGS. 13A and 13B, pretreatment liquid is dispensed to the sample 1, and a sample 2 subsequent to the sample 1 is sampled.

In a third A-cycle, as illustrated in FIGS. 13A to 13C, the sample 1 is agitated, and the pretreatment liquid is dispensed to the sample 2. In addition, a sample 3 subsequent to the sample 2 is sampled. Moreover, the sample 1 is subjected to re-sampling in two B-cycles which are subsequent to the third A-cycle and in the same basic cycle. Note that, the example shown in the drawings includes six biochemical test items; therefore, the sample 1 is subjected to re-sampling also in the two B-cycles in the next basic cycle and in the basic cycle thereafter.

In a fourth A-cycle, as illustrated in FIGS. 13B to 13D, the sample 2 is agitated, and the pretreatment liquid is dispensed to the sample 3. In addition, a sample 4 subsequent to the sample 3 is sampled. Note that, in the B-cycles which are subsequent to the fourth A-cycle and in the same basic cycle, re-sampling of the sample 2 is not carried out since the sample 1 is being re-sampled.

In a fifth A-cycle, as illustrated in FIGS. 13C and 13D, the sample 3 is agitated, and the pretreatment liquid is dispensed to the sample 4. In addition, although illustration is omitted, a sample subsequent to the sample 4 is sampled. Note that, also in the B-cycles which are subsequent to the fifth A-cycle and in the same basic cycle, re-sampling of the sample 2 and the sample 3 is not carried out since the sample 1 is being re-sampled.

In a sixth A-cycle, as illustrated in FIG. 13D, the sample 4 is agitated. In addition, dispensing of an unshown sample subsequent to the sample 4 or pretreatment liquid dispensing is carried out. Moreover, as illustrated in FIG. 13B, in the two B-cycles which are subsequent to the sixth A cycle and are in the same basic cycle, the sample 2 is re-sampled. Note that, like the sample 1, the sample 2 is re-sampled also in the two B-cycles in the next basic cycle and the basic cycle thereafter. Therefore, in the B-cycles during that, the sample 3 and the sample 4 are not re-sampled.

In addition, as illustrated in FIG. 13C, in the B-cycles in the three basic cycles after the re-sampling of the sample 2 is finished, the sample 3 is re-sampled.

In this manner, sampling, pretreatment liquid dispensing, agitating, and re-sampling are sequentially repeated.

For example, when 20 containers are disposed on the intermediate disk 20 in the case of the above-described shortest cycle, the intermediate disk 20 undergoes rotating operations as illustrated in FIGS. 14 to 20.

First, as illustrated in FIG. 14, at the timing of the A-cycle, the container denoted by the number "1" is subjected to sampling at the position of "a".

After the sampling, as illustrated in FIG. 15, at the timing of the next A-cycle, the intermediate disk 20 rotates counterclockwise by a distance corresponding to three containers, the pretreatment liquid is dispensed to the container denoted by the number "1" at the position of "b", and sampling to the container denoted by the number "18" is carried out at the position of "a".

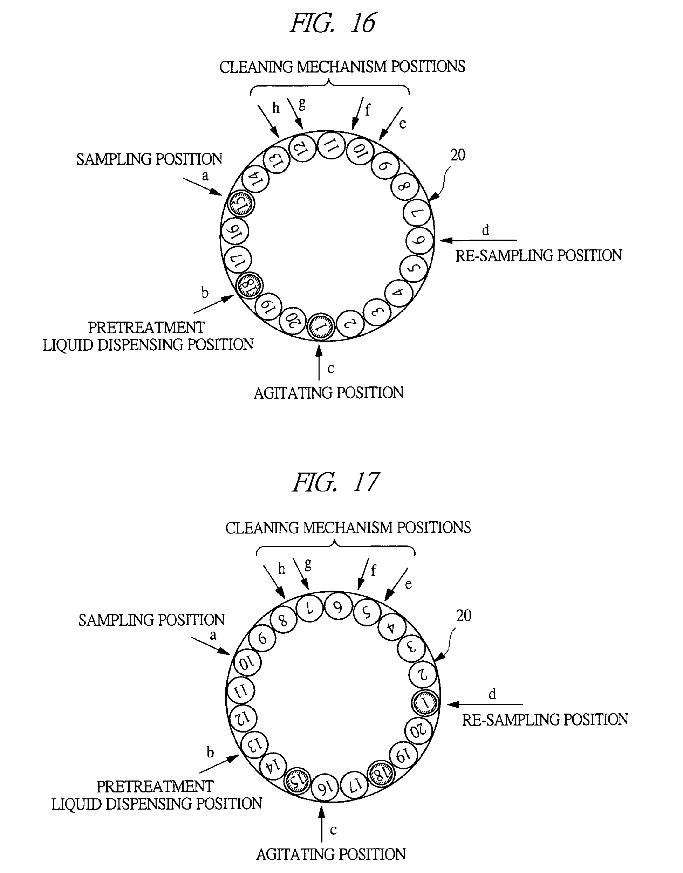

After the operation of FIG. 15, as illustrated in FIG. 16, at the timing of the further next A-cycle, the intermediate disk 20 further rotates counterclockwise by the distance corresponding to three containers, the container denoted by the number "1" is subjected to agitation of the sample therein at the position of "c", and the pretreatment liquid is dispensed to the container denoted by the number "18" at the position of "b". In addition, the container denoted by the number "15" is subjected to sampling at the position of "c".

After the operation of FIG. 16, as illustrated in FIG. 17, at the timing of the B-cycle, the container denoted by the number "1" is moved to the position of "d" by the rotation of the intermediate disk 20, and re-sampling is carried out at this position.

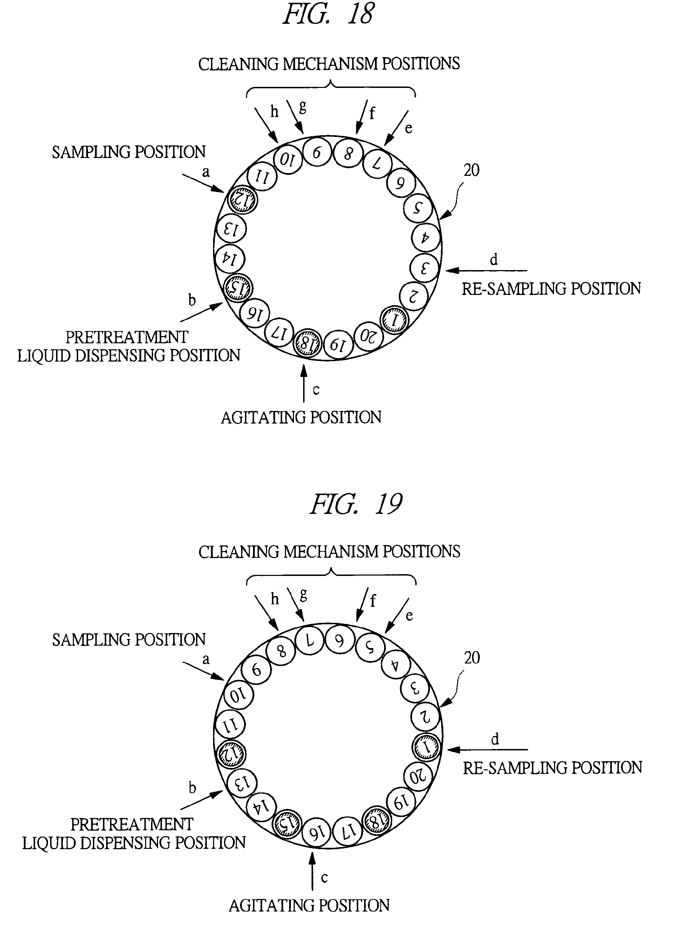

After the re-sampling, as illustrated in FIG. 18, at the timing of the next A-cycle again, the container denoted by the number "18" is moved to the position of "c" by the rotation of the intermediate disk 20, the sample therein is agitated at this position, and the pretreatment liquid is dispensed to the container denoted by the number "15" at the position of "b". In addition, the container denoted by the number "12" is subjected to sampling at the position of "a".

After the operation of FIG. 18, as illustrated in FIG. 19, at the timing of the B-cycle, the container denoted by the number "1" is returned to the position of "d" by the rotation of the intermediate disk 20, and re-sampling is carried out in the same manner as FIG. 17.

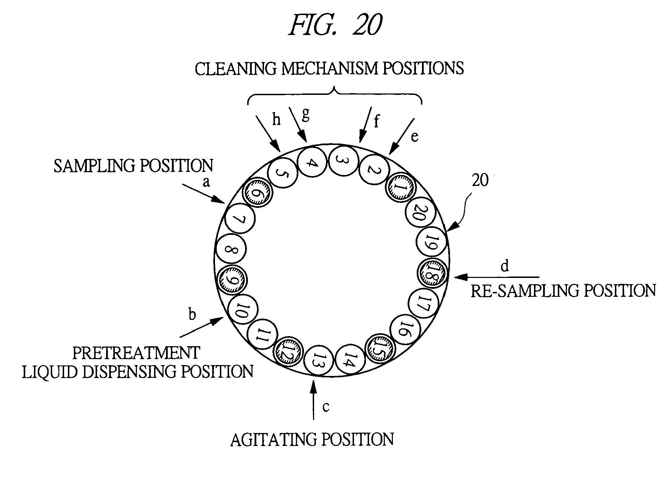

In the B cycle in the next basic cycle after the re-sampling from the container denoted by the number "1" is finished, as illustrated in FIG. 20, the container denoted by the number "18" is moved to the position of "d" by the rotation of the intermediate disk 20, and re-sampling is carried out at this position. In this state, agitation of the samples has been already finished in the containers denoted by the numbers "15" and "12", dispensing of the pretreatment liquid has been already finished in the container denoted by the number "9", and sampling has been already finished in the container denoted by the number "6".

Note that, in accordance with needs, the containers of which re-sampling has been finished are sequentially subjected to sample suction, cleaning liquid discharge, cleaning, and cleaning liquid suction at the positions of "e" to "h" at the timing of the A-cycles.

For example, the operation cycle time period for re-sampling of the sample 1 is set to two times (n=2) the minimum operation cycle time period, and three times (n=3) is set for the sample 2; in this case, the intermediate disk 20 carries out the operations illustrated in FIGS. 21A and 21B.

More specifically, in the A-cycles, sampling, pretreatment liquid dispensing, and agitating are sequentially carried out in the same manner as the case of the shortest cycle. On the other hand, in the B-cycles, as illustrated in FIG. 21A, first re-sampling is carried out in the latter B-cycle among the two B-cycles in the same basic cycle as the A-cycle in which agitating of the sample 1 is carried out. By virtue of this, the next re-sampling is prevented from overlapping the A-cycle of the next basic cycle.

The next re-sampling of the sample 1 is carried out in the first B-cycle in the basic cycle that is next to the basic cycle in which the first re-sampling has been carried out. Then, further next re-sampling is overlapped with the A-cycle, therefore shifted to the first B-cycle and carried out in the same basic cycle.

As illustrated in FIG. 21B, the sample 2 is subjected to first re-sampling in the B-cycle in the next basic cycle after the re-sampling of the sample 1 is finished. The cycle interval of the sample 2 is not overlapped with the A-cycles; therefore, re-sampling is carried out sequentially in the first B-cycles in the basic cycles, respectively.

If the sample has to be left untouched or heated at a certain temperature in the pretreatment, as illustrated in FIG. 22, sampling, pretreatment liquid dispensing, and agitating are sequentially carried out in the A-cycles in the same manner as the case of the shortest cycle. On the other hand, in the B-cycles, re-sampling is not carried out until a determined pretreatment time period elapses. Then, re-sampling is carried out at the timing of the B-cycle after the pretreatment time period elapses.

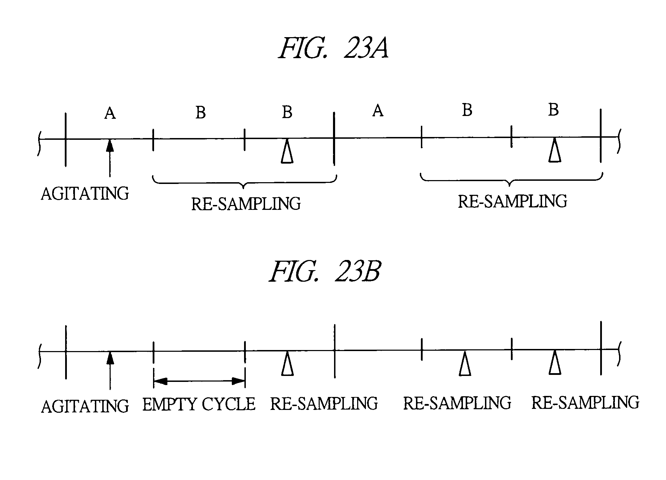

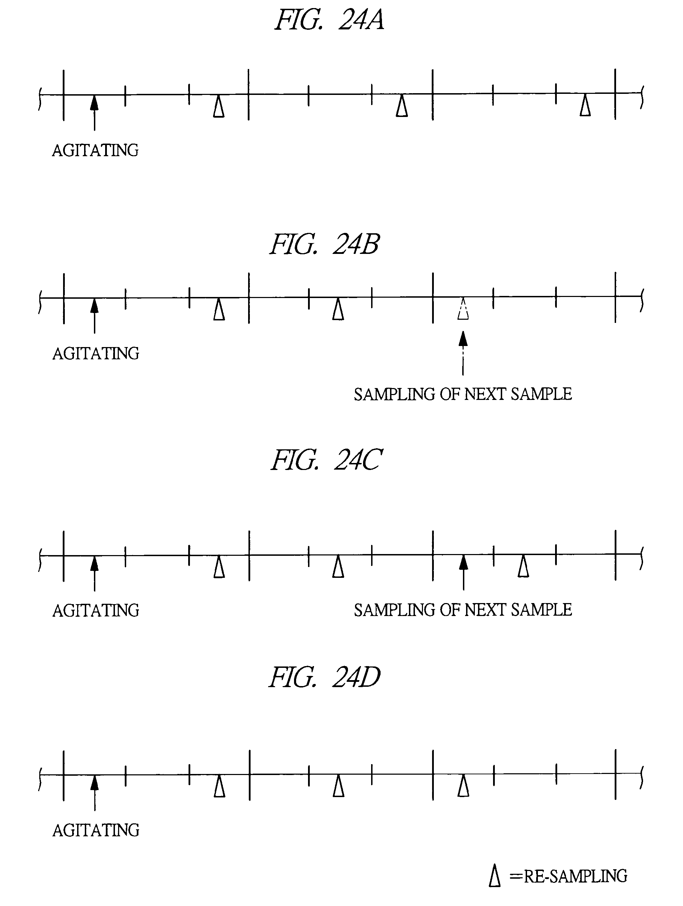

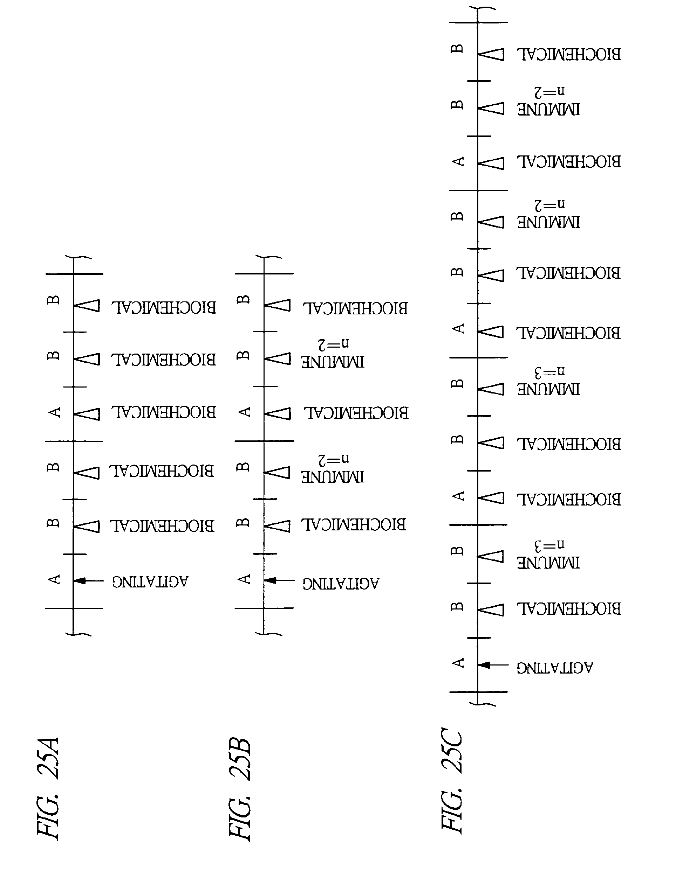

Subsequently, operation examples of test items will be described. FIGS. 23A and 23B are explanatory drawings illustrating examples of the operations in biochemical tests, FIGS. 24A to 24D are explanatory drawings explaining examples of the operations in immunoserological tests, and FIGS. 25A to 25C are explanatory drawings describing operation examples in the cases in which biochemical tests and immunoserological tests are combined.

In an item of the biochemical test, normally, pretreatment time is not limited, and the operation cycle of re-sampling is short; therefore, the operation cycle time period thereof requires only the minimum operation time period (n=1). However, in some cases, the amount of the sample is large, suction of the sample takes time, and therefore dispensing of the sample is not finished within the minimum operation cycle time period. In that case, as illustrated in FIG. 23A, the operation cycle time period for re-sampling is set to two times the minimum operation cycle time period (n=2).

In order to avoid carry-over of the reagent probe (not shown) upon reagent dispensing after re-sampling, cleaning of the reaction container 61 of the reaction disk 60 illustrated in FIG. 1, etc. is required in some cases. In that case, as illustrated in FIG. 23B, an empty cycle in which no re-sampling is carried out is set in the B-cycle in advance, and the empty cycle is used for cleaning the fixed container. Then, re-sampling is carried out in the B-cycle which is subsequent to an empty cycle.

In an immunoserological test, due to the principles of the analysis, the operation cycle of re-sampling is long compared with the biochemical test; therefore, the operation cycle time period is set to two times or more the minimum operation cycle time period (n≥2).

For example, when n=3 is set, as illustrated in FIG. 24A, the timing of re-sampling is not overlapped with the A-cycles. Note that, in the example illustrated in the drawing, re-sampling is carried out in the latter B-cycle in the basic cycle from the viewpoint for facilitating timing control of re-sampling; however, re-sampling may be carried out in the first B-cycle in the same cycle.

On the other hand, when n=2 is set, as illustrated in FIG. 24B, the timing of re-sampling is sometimes overlapped with the sampling operation of a next sample in the A-cycle. In that case, as illustrated in FIG. 24C, the sampling of the next sample is prioritized in the corresponding A-cycle, and the re-sampling is shifted by one cycle and carried out in the first B-cycle in the same basic cycle as the A-cycle.

Even when n=2 is set, if the sampling operation of a next sample is not inserted in the A-cycle, as illustrated in FIG. 24D, re-sampling is carried out along with the cycle of n=2 even in the A-cycle.

These operation examples in the immunoserological tests can be similarly applied also to the test items of other flow analysis such as blood coagulation tests.

According to the operation cycles described above, for example, when biochemical tests are continuously requested in the manner illustrated in FIG. 25A, re-sampling of the biochemical tests is continuously carried out also in the A cycles which do not include the sampling of the next sample.

When biochemical tests and immunoserological tests, in which n=2 is set, are requested, as illustrated in FIG. 25B, re-sampling of the biochemical tests and the immunoserological tests is alternately carried out.

When biochemical tests and immunoserological tests of n=2 and 3 are requested, as illustrated in FIG. 25C, regarding the re-sampling between the immunoserological tests, a necessary number of cycles are caused to be empty cycles so that one cycle is an empty cycle if n=2 and that two cycles are empty cycles if n=3, and the re-sampling of the biochemical tests is carried out during the cycles. Note that both of FIGS. 25B and 25C are examples of the case in which the sampling of a next sample is not present in the A-cycles.

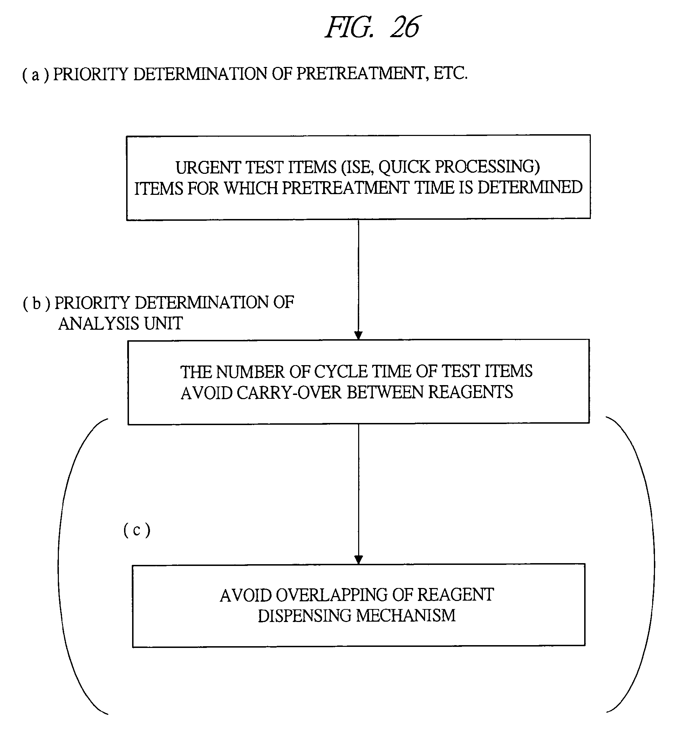

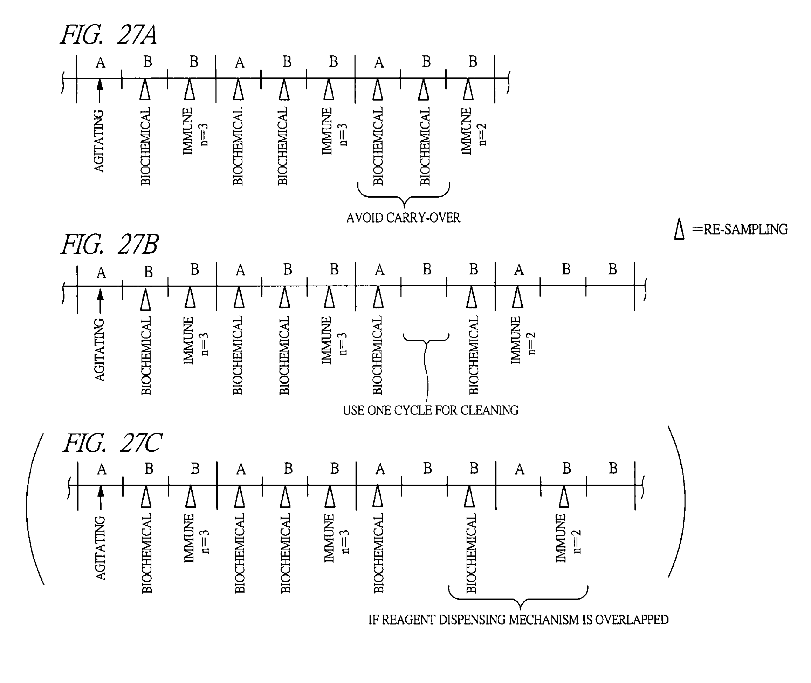

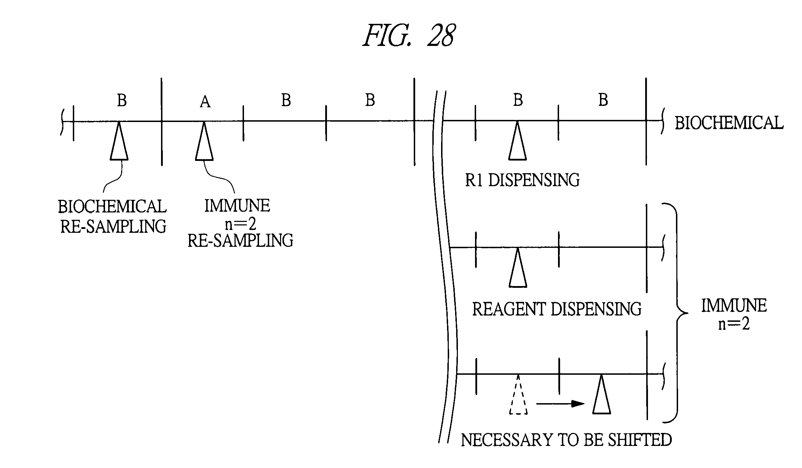

The control of such operation cycles is carried out in accordance with priority determination based on various conditions. Hereinafter, the priority determination will be described. FIGS. 26A to 26C are flow charts illustrating flows of the priority determination, FIGS. 27A to 27C are explanatory drawings explaining examples of operations in accordance with the priority determination, and FIG. 28 is an explanatory drawing explaining overlapping of the reagent dispensing mechanism.

First, as illustrated in FIG. 26A, in relation to pretreatment and reagent dispensing on the intermediate disk, presence of: (i) urgent test items such as an item to which an electrolyte test (ISE) or quick processing is requested; and (ii) test items for which pretreatment time is determined due to the necessity to leave the sample untouched or heating at a certain temperature is determined. If these items are present, they are prioritized and processed in the order of (i) to (ii).

Next, as illustrated in FIG. 26B, it is determined that by what number the minimum operation cycle time period is multiplied to obtain the operation cycle time period of the re-sampling to the test mechanism of each test item, in other words, what is the cycle time number "n" of each analysis unit, and necessity to avoid carry-over of the reagent at the analysis unit are determined. Then, the test item having a large number as "n" is prioritized and processed; and, when there is the necessity to avoid carry-over of the reagent, an empty cycle is set in advance.

In addition, when the reagent dispensing mechanism 65a (65b) is standardized for the intermediate disk 20 and the reaction disk 60 as illustrated in FIGS. 7 and 8, after re-sampling, the reagent dispensing timing of the biochemical test on the reaction disk 60 and the reagent dispensing timing of the flow analysis on the intermediate disk 20 are sometimes overlapped in the same operation cycle. In that case, as illustrated in FIG. 26C, the presence of overlapping of the reagent dispensing mechanism after re-sampling is determined. If overlapped, an empty cycle is set in advance before the re-sampling in order to avoid that.

An example in accordance with the priority determination in the case in which: five items are present as the items of biochemical tests, carry-over has to be avoided in one case, and three items are present as the items of immunoserological tests (n=3 in two items, n=2 in one item) will be described. Note that this example is the case in which the sampling of a next sample is not carried out in all of A-cycles.

As illustrated in FIG. 27A, when it is determined that carry-over of the reagent has to be avoided in the fourth item and the fifth item of the biochemical tests, as illustrated in FIG. 27B, an empty cycle for container cleaning is set between the fourth item and the fifth item of the biochemical tests, and re-sampling of the fifth item is carried out at the point shifted by one cycle.

In this example, the reagent dispensing mechanism is standardized for the intermediate disk and the reaction disk; and, for example, as illustrated in FIG. 28, in some cases, the timing of the dispensing of the first reagent (R1) in the fifth item of the biochemical tests after re-sampling and the dispensing of the reagent in the item of the immunoserological test of n=2 is overlapped, and the timing of the latter one has to be shifted. In that case, as illustrated in FIG. 27C, the timing of the re-sampling of the immunoserological test is shifted by one cycle in advance in order to avoid the overlapping of the reagent dispensing mechanism.

Note that the automatic analysis apparatus 1a may carry out analysis in combination with a test mechanism capable of setting the above-described operation cycle time period for re-sampling to an arbitrary time period other than n-times of the minimum operation cycle time period. As a result, further quick processing of the tests of a plurality of items can be carried out.

As described above, in the automatic analysis apparatuses 1a to 1d of the present invention, the re-sampling operation cycle time period in each test item is n-times the minimum cycle time period. Therefore, the timing of re-sampling can be aligned in the tests of a plurality of items having different analysis principles, and these tests can be efficiently carried out without making the apparatus configuration complex.

Specifically, the following items (1) to (4) are enabled by aligning the timing of re-sampling in the tests of the plurality of items to correspond to the minimum operation cycle time periods.

### (1) To carry out re-sampling such as a biochemical test which is an item having short cycle time during re-sampling of an item such as an immunoserological test having long cycle time

If the timing of re-sampling is not aligned among a plurality of items, sometimes, the test of the item having short cycle time cannot be finished during the item having long cycle time, or time excessively remains even after the test is finished. On the other hand, when the timing of re-sampling is aligned, the test of the item having short cycle time can be carried out without excess and deficiency of time during the test item having long cycle time, and the tests of the plurality of items can be efficiently processed. Therefore, the tests of the item having a large number of requests can be similarly carried out during the test item having a small number of requests.

### (2) To carry out re-sampling in the A-cycle when the operation of pretreatment or flow analysis reagent dispensing is not present in the A-cycle.

If the re-sampling operation cycle time period does not correspond to the minimum operation cycle time period, it is difficult to carry out re-sampling in the case in which the operation such as pretreatment is not present in the A-cycle. However, the re-sampling operation cycle time period is n-times the minimum operation cycle time period; therefore, it is enabled, and the tests of a plurality of items can be efficiently processed.

### (3) To share the pretreatment liquid dispensing mechanism for reagent dispensing in the test item having long cycle time, and to standardize the reagent dispensing mechanisms like allocation of pretreatment liquid in biochemical tests to the operation of dispensing when the reagent dispensing of corresponding items are not present.

If the timing of re-sampling among a plurality of test items is not aligned, reagent dispensing mechanisms are required respectively for the mechanisms of the test items in order to maintain processing ability, and the configuration of the apparatus becomes complex. However, the timing is aligned; therefore, the reagent dispensing mechanisms can be standardized, and the configuration of the apparatus can be simplified without reducing the processing ability. When the reagent dispensing mechanisms can be standardized, the disk for carrying out pretreatment can be shared for the reactions of the test items having long cycle time, and the configuration of the apparatus can be further simplified.

### (4) To adapt to new test items, which can be determined in the future, by carrying out simple timing control so that each operation cycle time period becomes n-times the minimum operation cycle time period.

If operation timing is finely controlled, when a new item is determined, it is difficult to incorporate the test of the new item. However, such an item can be suitably incorporated by the simple timing control of the present invention.

Moreover, the empty cycle is set in the B-cycle which is the cycle of re-sampling. Therefore, in the case of carry-over of the reagent or standardizing of the reagent dispensing mechanism, overlapping thereof can be avoided in advance. More specifically, if carry-over of the reagent is to be avoided after re-sampling, the re-sampled sample has to be discarded, which is a waste of the sample, re-sampling has to be carried out again after cleaning the container, and processing ability is also reduced. Also regarding overlapping of the reagent dispensing mechanism, when a measure is taken after re-sampling, the control of the reagent dispensing mechanism may become complex. On the other hand, when these situations are prevented in advance, waste of the sample can be prevented, and efficiency of processing can be improved.

Furthermore, when the above-described priority determination is carried out, quick responses can be made against urgent test items as a matter of course; and variations in termination of the tests due to differences in the length of time required for the tests can be prevented from being generated by prioritizing the items for which pretreatment time is determined and the test items having long cycle time. Moreover, the setting for avoiding carry-over of the reagent and overlapping of the reagent dispensing mechanisms is uniformly carried out by the priority determination; therefore, occurrence of these situations can be more reliably avoided, and efficiency of processing can be further improved. In other words, control of the operations can be systematically carried out by the priority determination, and the tests of a plurality of items can be more efficiently processed.

### INDUSTRIAL APPLICABILITY

The present invention can be utilized in an automatic analysis apparatus which automatically analyzes components of blood, etc.

### DESCRIPTION OF REFERENCE NUMERALS

- 1a: Automatic Analysis Apparatus
- 1b: Automatic Analysis Apparatus
- 1c: Automatic Analysis Apparatus
- 1d: Automatic Analysis Apparatus
- 10: Sample Disk
- 10a: Outer Circumference
- 10b: Center
- 11: Sample Container
- 15: Sample Dispensing Mechanism
- 16: Sample Dispensing Arm
- 17: Horizontal Rail
- 18: Perpendicular Rail
- 20: Intermediate Disk (Disk)
- 21: Disposable Container (Intermediate Container)
- 23: Cleaning Mechanism
- 30a: Flow Analysis Mechanism (Test Mechanism)
- 30b: Flow Analysis Mechanism (Test Mechanism)
- 30c: Flow Analysis Mechanism (Test Mechanism)
- 40: Housing Unit of Pretreatment-Liquid and Flow-Analysis-Reagent Container (Housing Unit of Pretreatment Liquid Container, etc.)
- 41: Container
- 45: Pretreatment-Liquid and Flow-Analysis-Reagent Dispensing Mechanism (Dispensing Mechanism of Pretreatment Liquid, etc.)
- 46: Dispensing Arm of Pretreatment Liquid, etc.
- 47: Perpendicular Rail
- 48: Horizontal Rail
- 50: Disposable Container Housing Unit
- 55: Disposable Container Transporting Mechanism
- 56: Container Holding Arm
- 57: Perpendicular Rail
- 58: Horizontal Rail
- 60: Reaction Disk (Test Mechanism)
- 61: Reaction Container
- 62: Photometric Mechanism
- 63: Cleaning Mechanism
- 65a: First Reagent Dispensing Mechanism
- 65b: Second Reagent Dispensing Mechanism
- 65c: Third Reagent Dispensing Mechanism
- 65d: Fourth Reagent Dispensing Mechanism
- 66a: First Reagent Dispensing Arm
- 66b: Second Reagent Dispensing Arm
- 66c: Third Reagent Dispensing Arm
- 66d: Fourth Reagent Dispensing Arm
- 67: Perpendicular Rail
- 68a: Horizontal Rail
- 68b: Horizontal Rail
- 68c: Horizontal Rail
- 68d: Horizontal Rail
- 69: Perpendicular Rail
- 70: Biochemical Test Reagent Cassette
- 71a: First Reagent Retaining Unit
- 71b: Second Reagent Retaining Unit
- 71c: Third Reagent Retaining Unit
- 71d: Fourth Reagent Retaining Unit
- L₁: Flow of Sample
- L₂: Flow of Sample
- L₃: Flow of Pretreatment Liquid, etc.
- L₄: Flow of Disposable Container
- L₅: Flow of Reagent

## Claims

1. An automatic analysis apparatus comprising:
a disk with an intermediate container disposed on the disk, the intermediate container carrying out pretreatment of a sample dispensed from a sample container using a pretreatment liquid or a reaction between the sample and a reagent; and
a test mechanism of a plurality of items of the sample dispensed from the sample container or from the intermediate container, wherein
a cycle time period of an operation of dispensing the sample from the sample container or the intermediate container to the test mechanism of the plurality of items is n-times a minimum operation cycle time period of each test item, where "n" is an integer or an intermediate value between integers.

2. The automatic analysis apparatus according to claim 1, wherein,
with intermediation by the disk, the minimum operation cycle time period is a rotating operation cycle time period of the disk.

3. The automatic analysis apparatus according to claim 1 or 2, wherein an empty cycle is set in the dispensing operation cycle of the sample.

4. The automatic analysis apparatus according to any one of claims 1 to 3, carrying out priority determination of the items (a) and (b) of:
(a) priority determination that, if (i) an urgent test item and/or (ii) a test item having a determined pretreatment time is present, processing of the items is prioritized in the order from (i) to (ii); and
(b) priority determination of prioritizing processing of the test item having a large number as "n" and setting an empty cycle in the dispensing operation cycle of the sample to avoid carry-over upon reagent dispensing at the test mechanism.

5. The automatic analysis apparatus according to claim 4, further carrying out
(c) priority determination of setting the empty cycle to avoid overlapping of the timing of dispensing the reagent by a reagent dispensing mechanism in a same operation cycle if the reagent dispensing mechanism for dispensing the reagent is common to the test mechanism of the plurality of items.

6. The automatic analysis apparatus according to any one of claims 1 to 5, also comprising the test mechanism capable of setting the cycle time period of the operation of dispensing the sample to an optional time period other than n-times of the minimum operation cycle time period.
